# EUROPEAN PATENT APPLICATION

(11) **EP 4 293 321 A1**
(43) Date of publication of application: **20.12.2023**
(21) Application number: 23170221.8
(22) Date of filing: 26.04.2023
(51) Int. Cl.: G01D 4/00

(54) **A DEVICE FOR A UTILITY METER**

(30) Priority: 13.06.2022 GB 202208632
(71) Applicant: Deer Technology Limited, Port Talbot Neath Port Talbot SA12 7AX (GB)
(72) Inventor: Jackson, Garry Raymond, Port Talbot, SA12 7AX (GB); Mort, Hugh William, Port Talbot, SA12 7AX (GB)
(74) Representative: Dempster, Benjamin John Naftel

(57) **Abstract**

The invention provides a device for attachment to a utility meter, the utility meter including a register 100 comprising a number in the form of a row of digits, the number indicating the consumption of the utility, the device including a digital camera 112 directed at the register 100, the device being arranged to monitor one position 134 in the register 100 corresponding to the position of one digit using the camera 112. The device includes a processor 17 arranged to detect from the camera image each time the digit in the said position in the register changes to a new digit, the device further including means to create a pulse signal in response to detection of changing of the digit.

## Description

The invention relates to a device for a utility meter.

Utility meters, for example for water or electricity or gas, may be mounted on a pipe or cable in a cupboard in a house or garage, or may be in a pit in the ground. A meter in a cupboard will be accessed by opening a door to the cupboard. A ground-based meter will be accessed by lifting an access cover.

Utility meters for water, gas and electricity represent consumption as a register which is a number represented by a string or row of digits either presented on mechanical counters, such as a row of rotating rings with digits on the outer cylindrical surface, or digital LCD displays, the register. This enables human reading of the utility meter. Many, but not all, of such meters include an internal magnet as part of the mechanical mechanism. The rotation of the magnet can be detected using an external reed switch or similar magnetic field detection device. This creates a volt free signal as a pulse. External third-party data loggers are connected to this volt free detection signal to enable remote profiling of consumption. If an installed meter does not have such a provision, automatic, remote consumption profiling is not possible without the meter being replaced, at significant owner expense and inconvenience.

A known utility meter reading device is disclosed in WO2019/81877, the subject matter of which is incorporated herein by reference. The device can be attached to a utility meter and uses cameras to take images of the display register of the utility meter. The cameras and other electronics are mounted on two PCBs mounted in a casing above a prism block carried by the casing. The prism block is arranged to be glued to the face of a meter so that the device can read the alphanumeric register of the meter.

According to one aspect of the invention there is provided a device for attachment to a utility meter, the utility meter including a register comprising a number in the form of a row of digits, the number indicating the consumption of the utility, the device including a digital camera directed at the register, the device being arranged to monitor only one position in the register corresponding to the position of only one digit using the camera, the device including means arranged to detect from the camera image each time the digit in the said position in the register changes to a new digit, the device further including means to create a pulse signal in response to detection of changing of the digit.

In this way, a utility meter which does not produce a pulse signal can be retro fitted with the new device, so that a pulse signal is created each time a digit in the selected position changes. In this way, data from the utility meter can be monitored remotely using known standard data loggers.

The device preferably includes means for selecting an area within the image corresponding to the position of one digit in the register. This reduces the area for analysis and simplifies the analysis.

The device preferably includes means for dividing the area of the position into regions. The device further preferably includes means for determining the average optical radiation intensity from each region. This provides an indication of the identity of the digit. Suitably, the device makes a determination that the digit has changed and sends a pulse if the pattern of the average optical radiation intensity from each region in the area has changed.

There may be at least six regions, preferably at least twelve regions.

There may be no more than 42 regions, preferably no more than 30 regions.

Wherein the area may be divided in any suitable way, but preferably is divided into a regular grid. The grid may be at least two by three, and preferably the grid is at least three by four. In a preferred embodiment, the grid is four by five. This gives a suitable balance between accuracy and data size.

An upper section in the area of the position above the normal location of the digit may be monitored for average optical radiation intensity. A lower section in the area of the position below the normal location of the digit may additionally or alternatively be monitored for average optical radiation intensity. In a mechanical register, when a digit changes, the ring will rotate, and the digit will move, so that the area above or below the position where the digit was will be occupied by part of the digit that was in the position or the new digit which is coming to arrive in the position. Preferably, if the intensity from the section is lower than before, the intensity information for the regions is not saved and a determination of change of the digit and sending of a pulse is postponed. In order to assess whether the digit has changed, the intensity pattern is saved and compared with the next reading, but that save does not take place if by this technique the device determines that the new digit has not yet arrived in place.

The device preferably includes means to transmit the image from the camera to an external location. This will allow a person installing the device to align the camera with the register and in particular with the digit of the register in the position to be monitored.

The device may be mains powered, but in a preferred embodiment, the device carries a battery to power the device.

The device is preferably arranged to wake up and review the camera image at time intervals. Where the device is battery powered, this will save battery life. The time intervals may be equal. The time intervals may be set to be the maximum time period that can be safely allowed without missing the changing of a digit. In the case of a mechanical register, this will mean that the device is not awoken when the digit might still be changing. Preferably the time intervals are set to be a minimum of the length of time typically taken for the digit in the register to change. More preferably, the time intervals are set to be a minimum of twice the length of time typically taken for the digit in the register to change. The time intervals may be of any suitable length and may be more than five minutes, preferably more than ten minutes, and may be less than 25 minutes, preferably less than 20 minutes.

While more than one camera may be provided, for simplicity preferably the device includes only a single camera.

The means to create a pulse signal in response to detection of changing of the digit may create more than one pulse in response to changing of a digit but preferably creates a single pulse in response to changing of a digit. According to another aspect of the invention there is provided a kit comprising the device of the preceding aspect of the invention and an adaptor plate, being a plate of optically transparent material which can be placed between the device and a meter to increase the distance from the camera to the register.

The kit may further include a tablet computer to communicate wirelessly with the device and receive an image signal therefrom. This can be used to assist with alignment of the device with the register, and selection of the area to be monitored.

According to a further aspect of the invention, there is provided a method in relation to a device for a utility meter, the utility meter including a register comprising a number in the form of a row of digits, the number indicating the consumption of the utility, the device including a digital camera to be directed at the register, the method including the steps of offering up the device to the meter, aligning the device with the register, attaching the device to the meter, the device monitoring one position in the register corresponding to the position of one digit using the camera, the device detecting from the camera image each time the digit in the said position in the register changes to a new digit, the device further creating a pulse signal in response to detection of changing of the digit.

Embodiments of the invention will now be described by way of example and with reference to the accompanying drawings, in which:
Figure 1 is a side elevation in cross section of the device of the embodiment on a utility meter in a ground pit with an access cover;
Figure 2 is a front elevation of the device of the embodiment on a utility meter in a meter cupboard on a wall, cupboard door not shown;
Figure 3 is a side elevation of the cupboard of Figure 2;
Figure 4a is a plan view of the device of the embodiment on a utility meter with a mechanical register, also showing a hand held tablet device;
Figure 4b is a plan view of a utility meter with an LCD register;
Figure 5 is a side elevation in cross section of the device of the embodiment;
Figure 6 is a perspective view from above of the device of the embodiment;
Figure 7 is a perspective view from above of a casing of the device of the embodiment;
Figure 8 is an underneath perspective view of the device of the embodiment;
Figure 9 is an underneath plan view of the casing of Fig 7;
Figure 10 is a side view of the casing of Fig 7;
Figure 11 is an underneath plan view of the casing and PCB of the embodiment;
Figure 12 is a side elevation in cross section of the casing and PCB of the embodiment;
Figure 13 is a perspective view from above of the device of the embodiment with a curing strip thereon;
Figure 14 is a perspective view from below of the device of the embodiment with the curing strip being offered up;
Figure 15 is a side view of the device of the embodiment on a meter face with the curing strip;
Figure 16 is an underneath plan view of the curing strip of the embodiment;
Figure 17 is an end elevation of the curing strip of the embodiment;
Figure 18 is a side elevation of the curing strip of the embodiment;
Figure 19 is an underneath plan view of a PCB of the device of the embodiment;
Figure 20 is a side elevation of the PCB of Fig 19;
Figure 21 is a top plan view of the PCB of Fig 19, not showing the batteries;
Figure 22 is a top plan view of the PCB of Fig 19 showing the batteries;

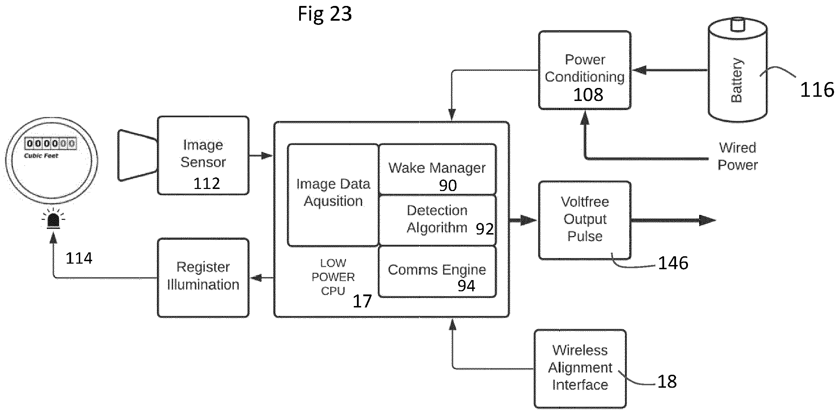

Figure 23 is a schematic diagram of the system of the device;
Figure 24 is a flow diagram of the operation of the device;
Figure 25 is a fragmentary detail view of the device and register of Fig 4a;
Figure 26 is a view of the captured image of register of Fig 25 from the camera of the device;
Figure 27 is the view of Fig 26 showing a selected area;
Figure 28 shows the area of Fig 27 alone;
Figures 29a to 29e show a digit in the monitored position at different stages of changing;
Figures 30a to 30e show sections of the monitored position at successive stages of changing of the digit in that position;
Figure 31 show the area of Fig 27 alone;
Figure 32 shows the area of Fig 31 divided into a grid; and.
Figure 33 is the view of Fig 33 showing example values for image intensity for each region of the grid.

The device 4 of the embodiment of the invention comprises a block or prism 15 in a casing 13, and a PCB 20.

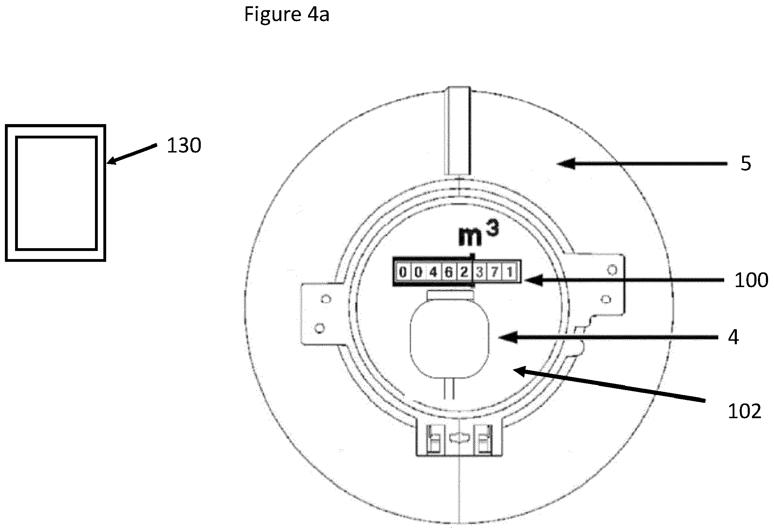

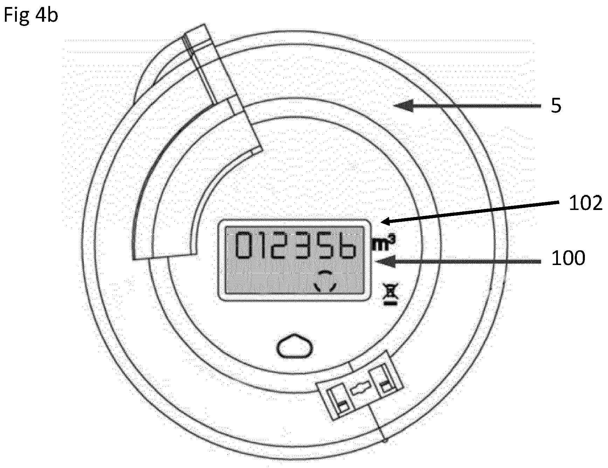

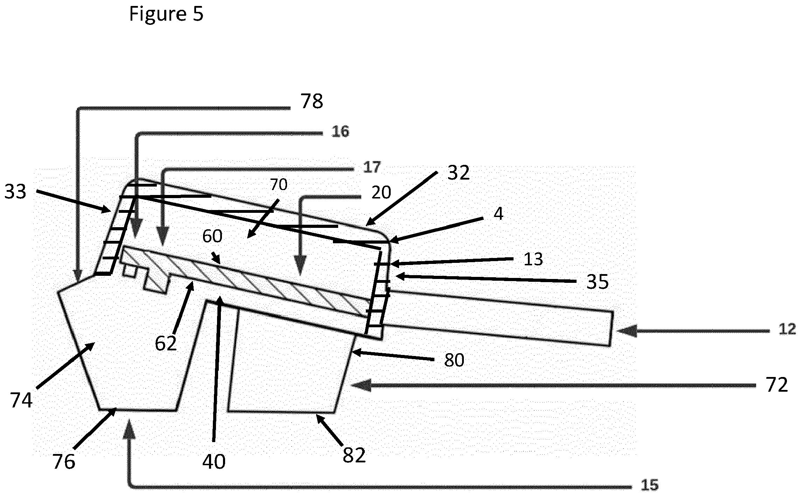

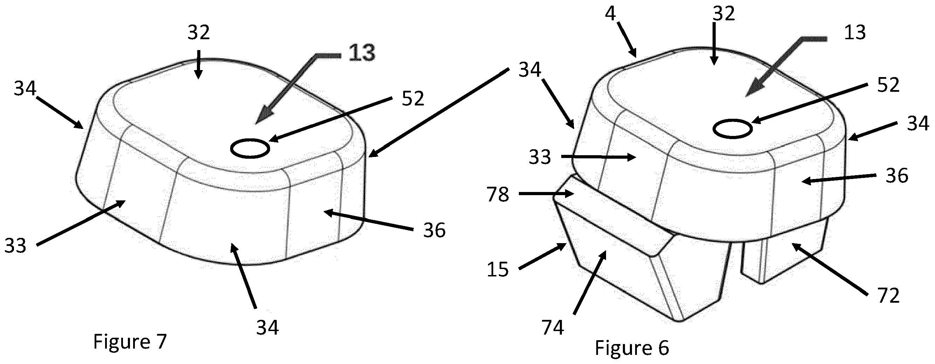

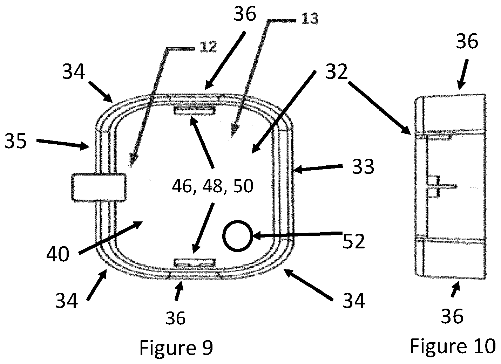

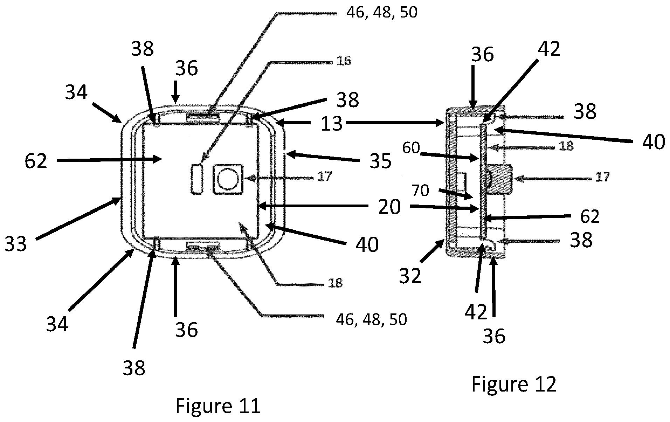

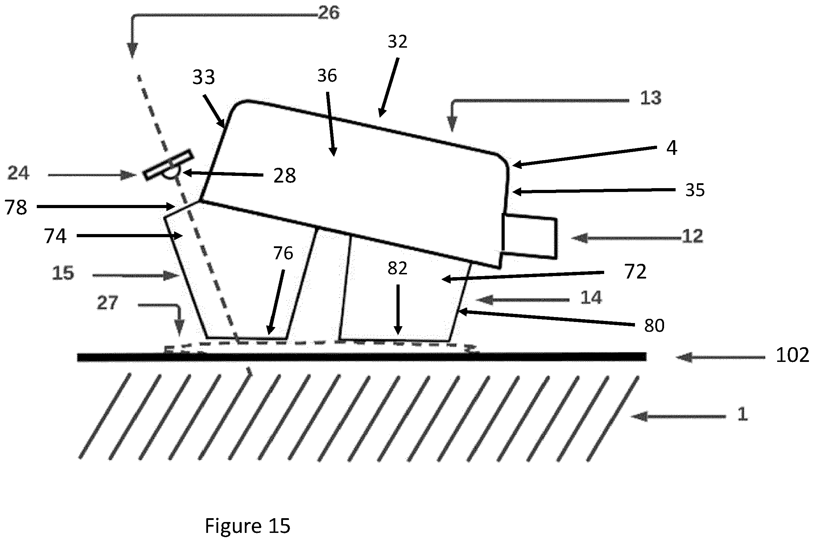

The casing 13 may be injection moulded from opaque plastics material. As shown in particular in figures 4 to 15, the casing 13 is generally in the form of an upturned rectangular tray or cup with a flat top 32, sides 33, 35, 36, and rounded corners 34. Two opposite sides 36 of the casing carry two spaced ribs 38 extending into the cavity 40 of the casing 13. The ribs 38 on each side face each other. Each rib 38 includes a step 42. Between the two ribs 38 on each of the two sides 36 is provided a clip 46. Each clip 46 depends from the top 32 adjacent one of the said opposite sides 36. Each clip 46 is in the form of a tab 48 and includes an inwardly extending undercut barb 50 near the lower end thereof. The casing 13 has a window 52 in the top 32 adjacent one of the corners.

To construct the device 4, the PCB 20 is clipped into the casing 13. To do this, the PCB 20 is offered up to the casing 13 and pushed into the cavity 40 so that the upwardly facing side 60 of the PCB 20 comes to rest on the steps 42 of the ribs 38. In so doing, the clips 46 will be forced apart by the PCB 20 as it travels into the cavity 40, the clips 46 bending resiliently towards the sides 36. Once the barbs 50 pass the downwardly facing side 62 of the PCB 20, the clips 46 will snap behind the PCB 20 to hold it in place in the casing 13.

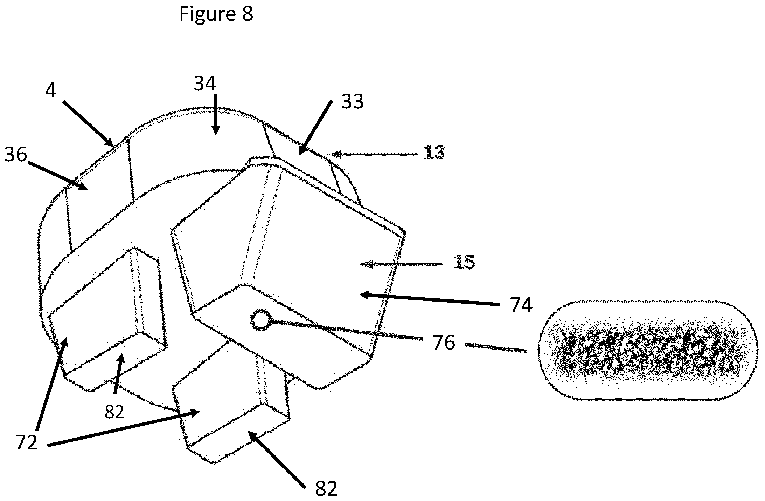

The block 15 is then injection moulded. So the casing 13 with the PCB 20 clipped into it is placed in an injection moulding machine. Clear plastics material is then injection moulded to form the block 15. The plastics material will flow around the PCB 20 to fill the gap 70 in the cavity 40 behind the PCB 20 and will fully encapsulate the PCB 20. The mould (not shown) is shaped to form three depending feet 72, 74. There is one large foot 74 at the front side 33 of the casing 13. The foot 74 extends over most of the width of the side 33, and presents a substantially rectangular lower surface 76. The lower surface 76 of the large foot 74 is rough, as shown in Fig 8. This is achieved by texturing the corresponding surface of the mould. The foot 74 also extends out beyond the side 33 of the casing 13 to form an upwardly facing ledge 78 along its full width adjacent the lower edge of the side 33. The other two feet 72 are generally rectangular and lie side by side behind the large foot 74. The rear sides 80 of the rear feet 72 depend from adjacent the rear side 35 of the casing 13. The rear feet 72 have an axis extending towards the large foot 74. The lower surfaces 82 of the rear feet 72 are in a common plane with the lower surface 76 of the large foot 74.

The block 15 may be made from an optically clear casting resin such as Crystalcast 1000 (trade mark).

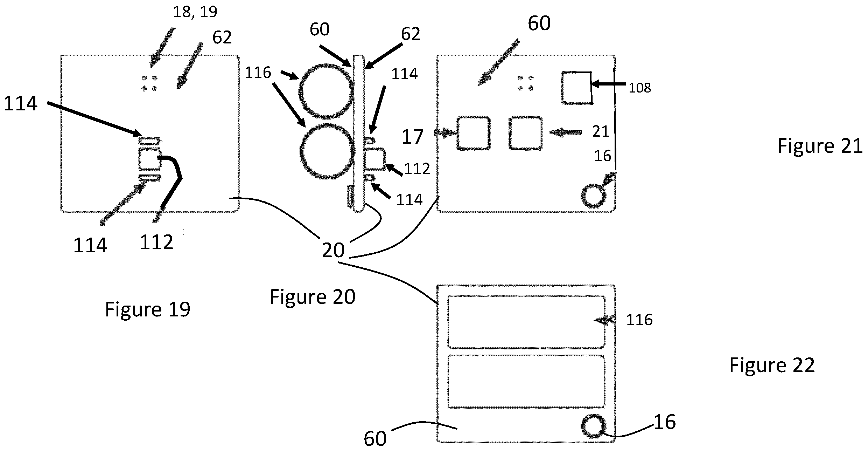

Figures 19 to 22 show the PCB 20. The PCB 20 carries on its top surface 60 an ambient light sensor 16, a local processing element or CPU 17, a wireless communications element 18, a wired communications interface 19, a vibration detecting element 21, a power conditioning subcircuit and two batteries 116. On its lower surface 62, the PCB 20 carries a microcamera 112, and an infra red LED optical radiation source 114 on each side of the camera 112. The camera 112 is directed down through the large foot 74 of the prism 15. A processor 17 is associated with the camera 112 and receives images from the camera 112, which are transmitted back to a remote centre over the wired or wireless connection 18, 19. Two batteries 116 are carried by the PCB 20 on the upper surface 60.

The device implementation is specifically optimised for long term operation with a battery. This requires special consideration for the electronic component design and selection as well as a more considered approach with the detection algorithm design. For application when an external power source is available, a wired interface can be used to eliminate a finite operating lifetime compared to the battery product. A variant of the ARM CORTEX can be used, a processing core commonly available from multiple silicon vendors.

The bottom surface 76 of the large foot 74 of the block 15 is rough, achieved by the corresponding surface in the metal tool having a pitted surface. This will ensure that the block 15 has an effective greater surface area for bonding than that of the glass or plastic meter face 102, thus increasing the grip on the device 4 side of the bond. This allows the device 4 to be removed from the meter surface 102 with the application of a shearing force to greatly increase the chance of the bond failing meter side, which results in a majority of adhesive remaining attached to the device 4 to leave the meter surface 102 clean. This is an important requirement for the meter owner. The pitted surface 76 on the block 4 looks visually opaque but the adhesive fills all pits resulting in a perfect optical path once cured.

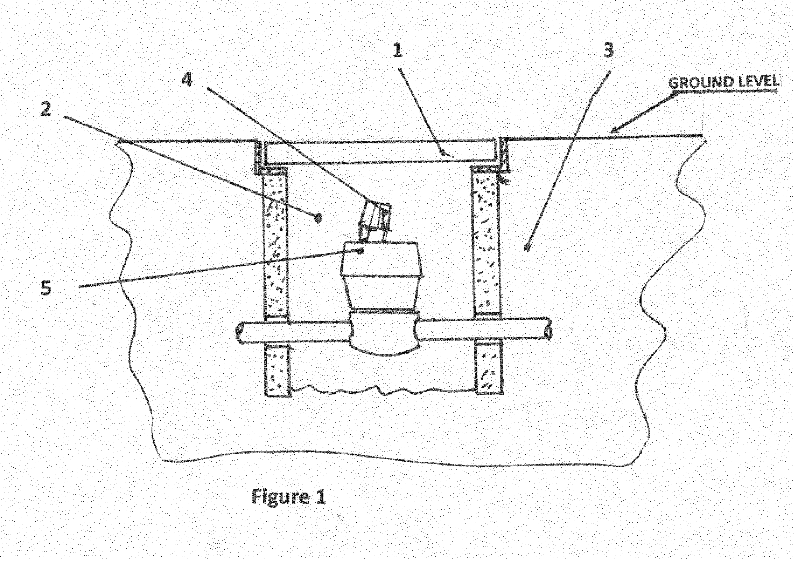

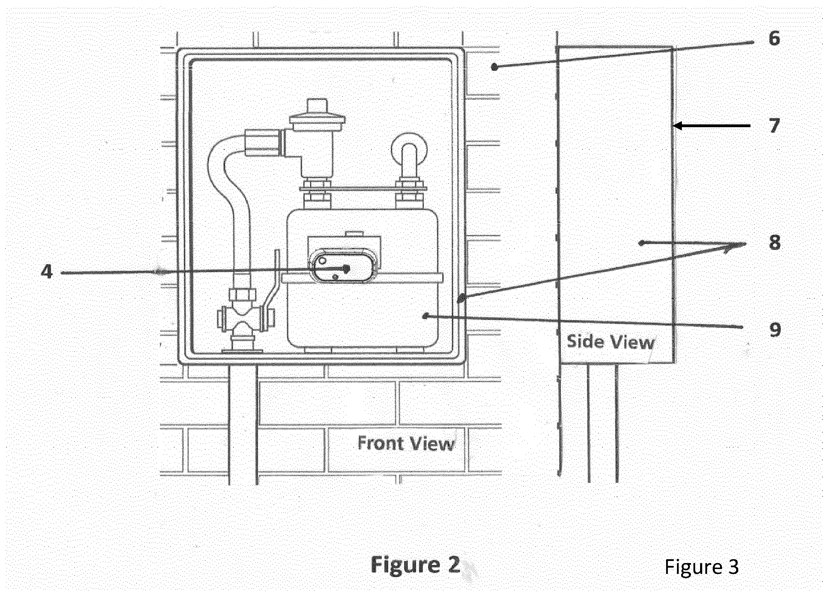

In use, a utility meter 5 will be located in a ground pit 2 as shown in Fig 1, or in a wall mounted cupboard 8, as shown in Fig 2.

In the ground pit 2 situation, a pit 2 in the ground 3 creates a chamber in the ground closed by an access cover 1. A utility meter 5, usually a water meter, is found on a pipe at the bottom of the pit 2.

In the case of a wall mounted cupboard 8, a cupboard 8 is mounted on a wall 6 and the cupboard 8 has a door 7. Inside the cupboard 8 is a cable or pipe and on the cable or pipe is a utility meter 9.

The utility meter 5, 9 has a register display 100 consisting of a row or string of numbers. This may be an LCD or LED display, an LCD display being shown in Fig 4b, or a mechanical display, such as a serial arrangement of adjacent rings 120 which turn to display different digits 122 on their outer periphery 124, as shown in Fig 4b. The device 4 of the embodiment of the invention can be mounted on the utility meter 5, 9. The register display 100 will be behind a transparent cover 102 in the form of a layer of glass or transparent plastic. As shown in Fig 4a, the device 4 is mounted offset from the register display 100. This means that the register display 100 can still be read by a user looking at the display 100. To attach the device 4, the surface of the transparent cover 102 adjacent the register display 100 is first cleaned to remove any dirt or grease. A UV curable adhesive, such as LOCTITE AA 3491 (trade mark), is then applied to the lower surface 76 of the large foot 74, and the device 10 is placed on the transparent cover 102. The position of the device 4 is then adjusted, so that the camera is aligned with the desired digit of the register display 100.

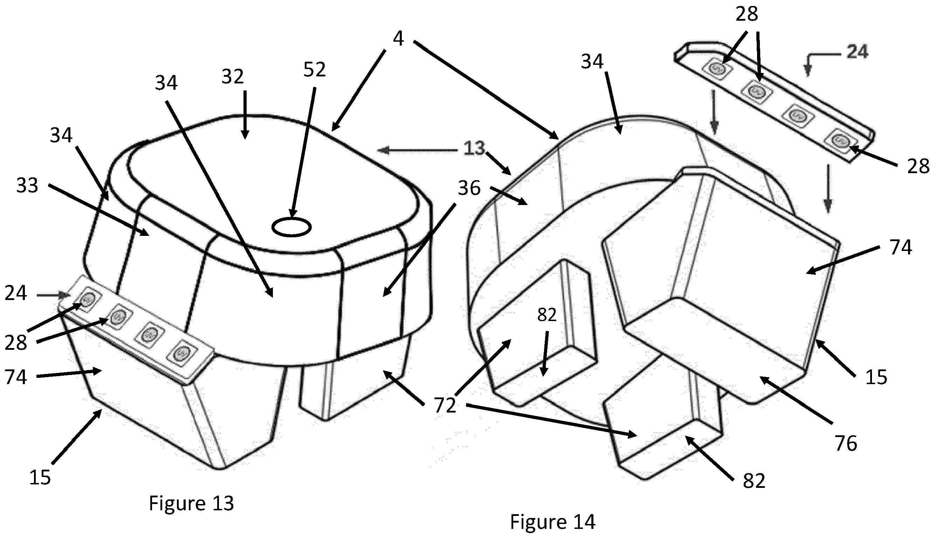

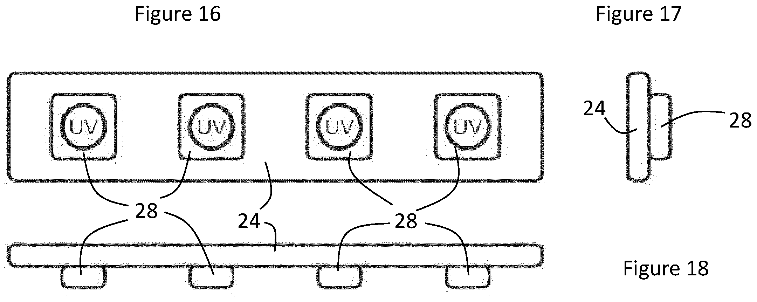

The UV adhesive 27 is then cured by shining UV light through the ledge or step 78 down to the lower surface 76 of the large foot 74. This is done using a metal PCB strip 24 which carries a plurality of UV LEDs 28, in this case, four LEDs 28, see Figures 13 to 20. Each UV LED PCB 24 will sit in an enclosure (not shown) that then sits precisely over the device 4 with the PCB strip 24 on the step 78 with the UV LEDs 28 facing the step 78 to shine UV light through the step 78 into the block 15 and down to the meter engaging surface 76. Each LED 28 may be a 4.4mm x 4.4mm LED with 1.2W flux output at 2.7W input power.

Important to efficiency is matching the wavelengths of the UV adhesive and LEDs 28. 365nm has been selected, but so long as these are matched, alternative UV adhesives and LEDs can be implemented.

The camera 112 position, relative to the surface 76 attached to the meter surface 102 is fixed geometry. This creates an effective working distance from the device 4 to the register 100 below the meter surface of 5-15mm. This will result in two to three digits within the field of view of the digital camera/image sensor 112.

In the event that the utility meter 5 has larger digits, or the digits are closer than 5mm from under the meter surface 102, bonding a flat, clear acrylic adaptor plate (not shown) to the meter surface 102 will optically reduce the digit size that the image sensor 112 can see. A set of adaptor plates of different thickness can be provided and the plate of the appropriate thickness can be interactively selected at installation to achieve two to three digits within the field of view. The adaptor plate will first be bonded to the meter surface 102 and the device 4 then bonded to the adaptor plate.

The image sensor 112 in the device 4 will have low native spatial resolution, typically 640x480 pixels. The sensor 112 will have an I2C setup/control interface and a digital parallel 8-bit pixel port. Colour is not required as the IR filters will heavily attenuate most non-IR parts of the visible spectrum. The pixel interface will be routed directly to the processor 17 for image capture. It is beneficial for size of the device 4 to be minimised. To help achieve this, suitable image sensors will be the OmniVision OVM7690 (trade mark) family of camera cube devices with integrated optics (with no IR cut-off) or one of the many variants of this class of image sensor from alternative manufacturers with the addition of external low-cost plastic optics.

The detection algorithm will partially exploit a feature on this type of image sensor 112, specifically the ability to set a sub-window of interest within the full 640x480 image and return the average intensity. The advantage of this approach will be explained in the algorithm section.

To achieve a small device height profile above the meter 5, the short focal distance of the image sensor 112 and associated optics is important, as this will restrict the number of digits the sensor 112 will see. A sensor 112 to end of prism 76 height of 10-20mm will achieve two to three digits in view on most registers 100 on most meters with the required digit of interest selected at installation.

### Processor

The processor 17 will have three main modes of operation:
- Device interactive Installation and alignment mode.
- Deep sleep, ultra-low power mode between wake and analysis cycles.
- Image capture, analysis, and pulse generation.

Most of time is spent in an ultra-low power mode to preserve system power in the event it is powered from a battery 116 with limited capacity. Interactive installation requires images to be captured by the camera 112 and streamed back to a handheld device 130, such as an iPad (trade mark) or other tablet, for display. This is achieved by the processor 17 capturing images from the image sensor port via DMA (Direct Memory Access), performing compression and then sending out over a wireless interface 18, either WIFI or Bluetooth. To reduce size and cost, effort to avoid a multi-chip solution is required in selection of the processor. The ESP32 family of devices offers sufficient processing power and peripheral integration to implement a miniature solution running an optimised detection algorithm, achievable due to the steps taken to reduce image processing demands.

### Communications

Communication to the outside world is only required at installation, for the remainder of the deployment of the device 4, all signalling will be a simple volt free switch to indicate to a conventional datalogger that a digit has changed. The installation communications will be bidirectional, one direction sending compressed images from the sensor 112 to support interactive alignment, the other from the displaying device 130 where the operator indicates (by drawing over a touch sensitive screen to define the region) where the digit of interest 128 is within the returned images. A highly integrated part, such as the ESP32, includes 2.4GHz bluetooth and WIFI on chip, both of which can be available to support installation communications and both of which are also available on standard mobile devices removing the need for any specialist installation equipment.

### Power design: the device wake frequency

The device implementation is specifically optimised for long term operation with a battery. This requires special consideration for the electronic component design and selection as well as a more considered approach with the detection algorithm design. Critical to achieving a low powered design is the ability for the processing element 17 to enter an ultra-low power sleep mode whilst retaining the ability to wake according to internal timers, exploiting internal capabilities to remove the requirement for additional external circuitry, one of the key drivers to minimise the physical size on the surface of the meter 5.

The wakeup time must be correctly determined to avoid missing digit changes whilst the device 17 is sleeping. This parameter needs to be determined at the point of installation; two methods are proposed to achieve this:

### 1. Self-Learning:

For self-learning to work it is necessary to setup the meter 5 with the maximum resource the meter 5 is monitoring for that specific installation. Considering water meters 5, this would involve setting all downstream valves open to their maximum. This will cause the digits on the register 100 to change at their maximum rate. The device 4, via a WIFI or Bluetooth connected installation display device 130, will start the self-learning algorithm of the device processor 17. This algorithm will run the device 4 with no sleep periods and identify the time between digit changes in the monitored position on the register 100. If the time between digit changes is not periodic then the algorithm will identify that the digit of interest is changing too rapidly without incurring data loss. The installing display device 130 will report the impact on battery life for a selected position of digit and position of digit at the maximum consumption rate. This approach uses the same detection algorithm as would normally be used on a wake cycle to check for an operational digit change as described in the sections below.

### 2. Fixed Timing:

When self-learning is not possible, for example due to practical issues controlling the downstream resource, calculating the minimum rotation period based on the maximum meter flow rate and the digit of interest is easily done. As an example, a water meter 5 with a maximum flow rate of 2 cubic meters per hour will mean that the least significant digit 132 can change at a maximum rate of once per 30 minutes. This will mean one pulse generated every cubic meter of water consumed and the device 4 will need to wake up at least once every 15 minutes not to miss a digit change. Using the tenths of a cubic meter register 133 will require the sensor to wake at least every 90 seconds with the pulse produced on digit change then representing 1/10 m³ of water consumed. This information can be input through the handheld device 130.

### Detection Algorithm

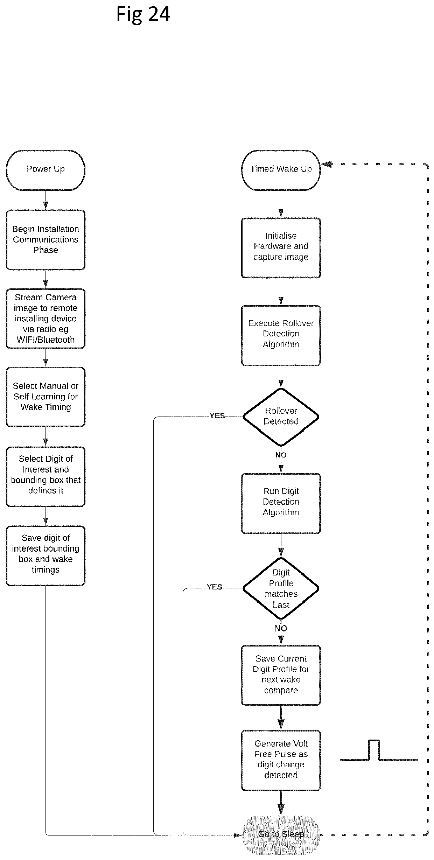

Figure 24 details the flow of operation from power up of the device 4, the key sections will be described in the sections to follow.

### Device Installation

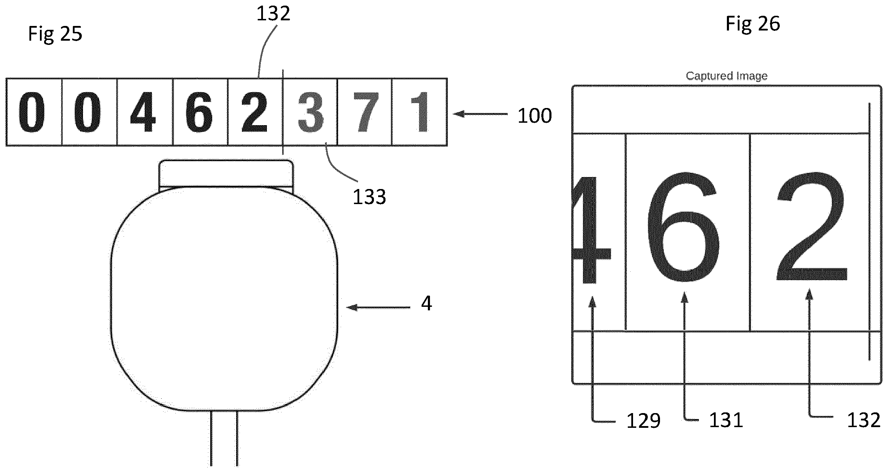

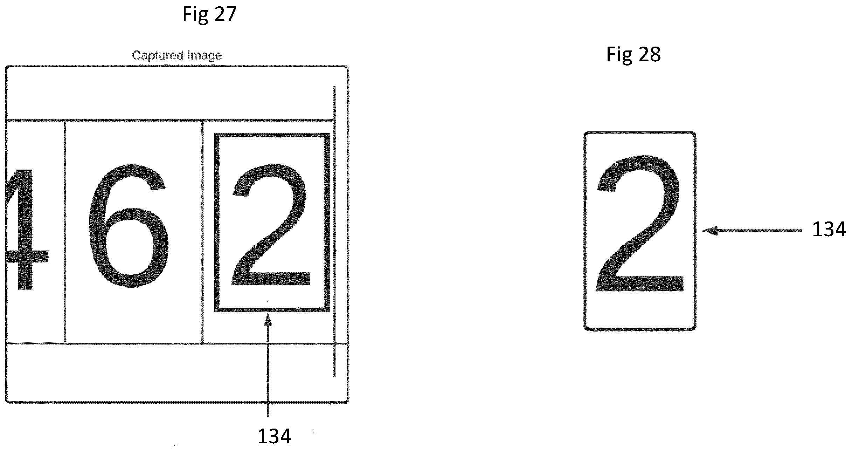

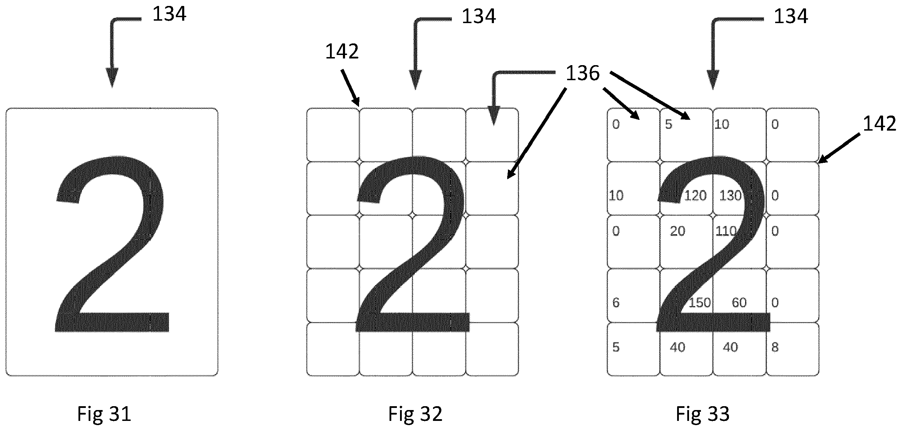

Figure 25 depicts the device 4 placed on the surface of a meter 5, positioned generally over the digits "4", "6" and "2" of the register 100. On power connection, the installation process begins and an image like that seen Figures 26 and 27 will be produced and shown on the display device 130. Placement is such that two complete digits are visible, the "6" (131) representing 10's of cubic metres and the "2" 132 that represents units of cubic metres, and part of the "4" (129) that represents hundreds of cubic metres. The installation process will require the technician to create a bounding box 134 around the digit of interest, in this case this is the digit "2" with the digit change representing one cubic metre consumed. Figure 31 shows the bounding box 134 superimposed on the image and figure 32 shows the resulting extracted area of interest for all future digit detection analysis. This manual, complete once, installation operation, removes the requirement for any complex digit detection algorithm and eliminates any inherent segmentation errors due to the content of the actual register image.

This x,y pixel pair that define the user selected region 134 which contains the digit is stored within the device 4 and used each time the device 4 wakes to carry out detection analysis.

The optics and geometry of the device 4 ensure that the register digits occupy a large proportion of the captured image, this will vary across different types of meters 5.

### Wake Analysis (general)

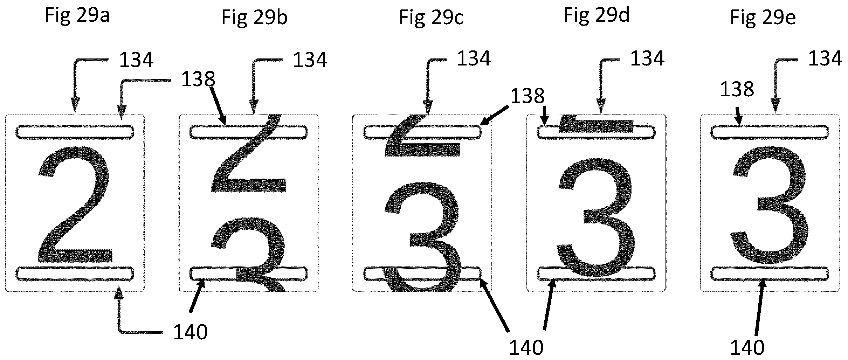

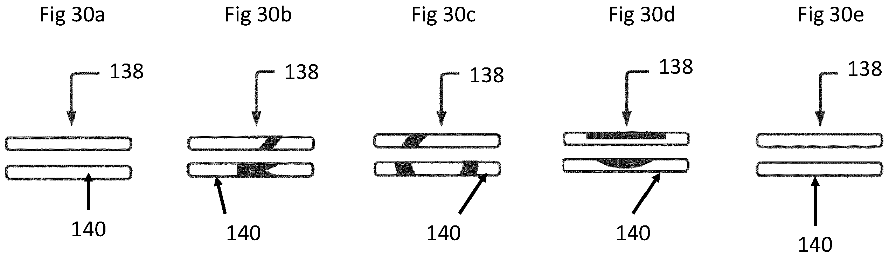

Simplistically, each wake cycle of normal operation can be broken into four parts:
1. Splitting the digit of interest area 134 into key regions 136 ready for intensity analysis (figures 31, 32 and 33).
2. checking if the digit is in the rollover (digit transitioning) phase (figures 29a to 29e and 30a to 30e).
3. If not in rollover, compare digit intensity grid to last non rollover digit's reference
4. pulse generation and digit intensity grid save but only if confirmed as changed.

Image analysis has been largely reduced to carrying out average intensity checks on regions 136 of interest within the main image 134. This can be implemented on most image sensors, including the OVM7690 and family. This means the actual image does not need to be captured or processed directly by the processor 17, only the average intensity for each defined window 136. The defined window 136 can be changed easily and quickly with a new region for analysis by the image sensor's control interface. This novel approach allows the characterisation of different parts 136 of the digit's area 134, significantly reducing the amount of data and processing but retains spatial information on the digit. For flexibility, the pixel interface to the processor 17 can be used to capture the full image for cases when the image sensor 112 does not support this feature or if additional image processing steps should be needed.

The rollover of a digit is an artefact of the mechanical nature of an analogue meter, Figure 4a (not relevant for digital registers (Fig 4b)) and occurs when the preceding digit transitions for example "9" to "0". For a constant flow of resource, this process will take 1/10 of the time that it will take for the digit of interest to change, but for irregular flow rates this state can remain for extended periods of time extending over many wake cycles. Considering figures 29 and 30, rollover of the least significant digit (a "2" in this case), will occur when the adjacent right hand digit reaches "9". Simple analysis and comparison of this data during rollover will result in false digit change detection and must be discounted. The wakeup period has been defined as a minimum of twice the digit of interest change rate, this ensures that at least one image of the digit at wake will not be in rollover state.

To detect the rollover state, two sections 138, 140 of interest are defined, one at the top of the digit area 134 and one at the bottom of the digit area 134. These sections 138, 140 are analysed, with an intensity index calculated. Any partial digit within either section 138, 140 will significantly change the value compared to when no partial digit is present when not in rollover. When this state is identified, the processor 17 can safely return to sleep with no further action required.

Figures 31, 32 and 33 show the notional grid 142 across the area 134 of interest and the corresponding regions 136 with an example of the intensity index for each region 136 from analysis. This grid-based intensity analysis forms the key data for subsequent comparisons to identify that a digit has changed. Once a change has been detected, a voltfree pulse is generated of 5mS duration, new digit intensity grid values are stored and then the device 4 returns to sleep.

### Volt free detection pulse

This is the simple output that is generated each time a digit change is detected and connects directly into a third-party data logger. A volt-free output is used as this is the interface type normally available on meters that have a pulsed output capability. This type of interface provides a high level of electrical isolation between the sensor 112 and the logging device. The device 4 will implement the volt-free interface using such a device as a surface mount solid state relay or opto-isolator 146. The pulse will be 5-10 mS nominal in width. A single pulse will be output each time a digit change is detected.

RF technologies suitable for the wireless link are Bluetooth 4/5 for local connection to monitoring station, GSM, NBiOT and CATM1 for direct to mobile network operators' infrastructure and LoRa (or alternative) operating at 433, 868 or 915 MHz in the licence free bands for direct to custom provided base stations and infrastructure. Wired links are based around serial communications over physical layers providing single ended (RS232) or differential pair (RS485) or similar industrial standards.

The simplest implementation, supporting the smallest physical implementation of device, may have only a small amount of signal conditioning to allow the sensor information to be available on the communications cable to an external data-logger. The external data-logger will then do all power management and analysis.

The most complex, and largest physical implementation of device may include an integrated battery, analysis processor and wireless communication sub-system such as bluetooth or LoRa.

The invention reduces the risk of small area contamination preventing optical efficiency. Encapsulation of the PCB 20 in the block 15 material provides a completely waterproof solution.

Creating the optical path in this manner significantly reduces compounding alignment errors that would otherwise be present using separate parts to manufacture the device. This means positioning the device on the surface of the meter, to capture the surface area of interest, will be highly consistent for each specific meter type greatly simplifying installation. Creating an optical pathway insensitive to contamination or other environmental conditions will result in consistent optical measurements and ultimately simplify the detection algorithm implementation.

By means of the invention, a utility meter 5 which does not produce a pulse signal can be retro fitted with the device 4 of the embodiment of the invention, so that a pulse signal is created each time a digit in a selected position changes, and in this way, data from the utility meter can be monitored remotely using known standard data loggers. This enables data to be collected without the expense and down time of replacement of the utility meter 5.

As an alternative to UV curable adhesive, a two component epoxy clear adhesive could be used, such as Loctite EA 9455 (trade mark). As a further alternative, an optically clear double sided adhesive tape could be used. Although the device has been designed to be bonded to meters in harsh environments, the device can also be bonded with optical tape when environmental conditions are favourable, normally indoor meter cabinets. In this use case, the optical path is still perfectly preserved at the point of installation as the tape provides the semi-permanent optical interface between the meter and the device. Removal also benefits from the rough block surface 76 as in the case of UV adhesive and in most cases the tape will remain attached to the block 15 when shearing force is applied.

The UV-LED PCB 24 may be made of aluminium to improve thermal efficiency to support increased energy density.

As an alternative to injection moulding, other types of casting may be used, in particular, vacuum casting or RIM casting.

Fixing an optical sensor to the surface of a meter can be achieved in a number of ways;
- using a mechanical strapping system. This relies on minimal contamination between the meter surface and the device and is only suitable for indoor installations. As well as physical contamination such as dirty water or chemical waste, any air void between the surfaces will result in a 'micro-climate' and the potential for surface condensation.
- using a 2-part optically clear adhesive. This solution requires that the device is accurately held for the curing time. Movement during this time can create surfaces in the bond which will impact on the optical characteristics. A rapid curing time requires locating the correct alignment position before the adhesive sets, a slow curing time requires the device is mechanically held in place for an extended time.
- using a UV based adhesive. This solution has the advantage of allowing as much time is needed to find the correct alignment position before activating the UV light source to cure.

There may be between one and four UV LEDs 28 depending on the size of the device 4, in particular its width.

In another embodiment, the LEDs 114 alongside the camera 112 may not be infra red but may be another wavelength of optical radiation, or may be multispectral.

In another embodiment, there may be only one battery 116.

## Claims

1. A device for attachment to a utility meter, the utility meter including a register comprising a number in the form of a row of digits, the number indicating the consumption of the utility, the device including a digital camera directed at the register, the device being arranged to monitor only one position in the register corresponding to the position of only one digit using the camera, the device including means arranged to detect from the camera image each time the digit in the said position in the register changes to a new digit, the device further including means to create a pulse signal in response to detection of changing of the digit.

2. A device as claimed in claim 1, wherein the device includes means for selecting an area within the image corresponding to the position of one digit in the register.

3. A device as claimed in claim 1 or claim 2, wherein the device includes means for dividing the area of the position into regions.

4. A device as claimed in claim 3, wherein the device includes means for determining the average optical radiation intensity from each region, and optionally wherein the device makes a determination that the digit has changed and sends a pulse if the average optical radiation intensity from each region has changed.

5. A device as claimed in claim 3 or claim 4, wherein there are at least six regions, optionally wherein there are at least twelve regions, optionally wherein there are no more than 42 regions, optionally wherein there are no more than 30 regions.

6. A device as claimed in any of claims 3, 4 and 5, wherein the area is divided into a regular grid, and optionally wherein the grid is at least two by three, optionally wherein the grid is at least three by four, optionally wherein the grid is four by five.

7. A device as claimed in any preceding claim, wherein an upper section in the area of the position above the normal location of the digit is monitored for average optical radiation intensity.

8. A device as claimed in any preceding claim, wherein a lower section in the area of the position below the normal location of the digit is monitored for average optical radiation intensity.

9. A device as claimed in claim 14 or claim 15, wherein if the intensity from the section is lower than before, the intensity information for the regions is not saved and a determination of change of the digit and sending of a pulse is postponed.

10. A device as claimed in any preceding claim, wherein the device includes means to transmit the image from the camera to an external location.

11. A device as claimed in any preceding claim, wherein the device carries a battery to power the device.

12. A device as claimed in any preceding claim, wherein the device is arranged to wake up and review the camera image at time intervals, optionally wherein the time intervals are equal, optionally wherein the time intervals are set to be the maximum time period that can be safely allowed without missing the changing of a digit, optionally wherein the time intervals are set to be a minimum of the length of time typically taken for the digit in the register to change, optionally wherein the time intervals are set to be a minimum of twice the length of time typically taken for the digit in the register to change.

13. A device as claimed in claim 12, wherein the time intervals are more than five minutes, optionally wherein the time intervals are more than ten minutes, optionally wherein the time intervals are less than 25 minutes, optionally wherein the time intervals are less than 20 minutes.

14. A kit comprising the device of any preceding claim and an adaptor plate, being a plate of optically transparent material which can be placed between the device and a meter to increase the distance from the camera to the register.

15. A kit as claimed in claim 28, wherein the kit further includes a tablet computer to communicate wirelessly with the device and receive an image signal therefrom.

16. A method in relation to a device for a utility meter, the utility meter including a register comprising a number in the form of a row of digits, the number indicating the consumption of the utility, the device including a digital camera to be directed at the register, the method including the steps of offering up the device to the meter, aligning the device with the register, attaching the device to the meter, the device monitoring only one position in the register corresponding to the position of only one digit using the camera, the device detecting from the camera image each time the digit in the said position in the register changes to a new digit, the device further creating a pulse signal in response to detection of changing of the digit.
